# EUROPÄISCHE PATENTSCHRIFT

(11) **EP 1 720 000 B1**
(45) Veröffentlichungstag und Bekanntmachung des Hinweises auf die Patenterteilung: **13.08.2008**
(21) Anmeldenummer: 06009161.8
(22) Anmeldetag: 03.05.2006
(51) Int. Cl.: G01N 15/02

(54) **Two-Cell Echo-DWS**
Two cell echo DWS
Echo DWS à double cellule

(30) Priorität: 04.05.2005 CH 7862005
(43) Veröffentlichungstag der Anmeldung: 08.11.2006
(73) Patentinhaber: LS Instruments GmbH, 1700 Fribourg (CH)
(72) Erfinder: Scheffold, Frank, 1723 Marly (CH); Schurtenberger, Peter, 3186 Düdingen (CH)
(74) Vertreter: P&TS Patents & Technology Surveys SA

(56) Entgegenhaltungen:
- ZAKHAROV P ET AL: "Multispeckle diffusing-wave spectroscopy with a single-mode detection scheme" PHYS. REV. E STAT. NONLINEAR SOFT MATTER PHYS.; PHYSICAL REVIEW E - STATISTICAL, NONLINEAR, AND SOFT MATTER PHYSICS JANUARY 2006, Bd. 73, Nr. 1, Januar 2006 (2006-01), XP002396706
- SCHEFFOLD F ET AL: "Diffusing-wave spectroscopy of nonergodic media" PHYSICAL REVIEW E (STATISTICAL, NONLINEAR, AND SOFT MATTER PHYSICS) APS THROUGH AIP USA, Bd. 63, Nr. 6, Juni 2001 (2001-06), Seiten 061404/1-11, XP002396707 ISSN: 1063-651X
- PHAM K N ET AL: "Ensemble-averaging in dynamic light scattering by an echo technique" REVIEW OF SCIENTIFIC INSTRUMENTS, AMERICAN INSTITUTE OF PHYSICS, US, Bd. 75, Nr. 7, Juli 2004 (2004-07), Seiten 2419-2431, XP012071686 ISSN: 0034-6748
- ROMER S ET AL: "Sol-gel transition of concentrated colloidal suspensions" PHYSICAL REVIEW LETTERS APS USA, Bd. 85, Nr. 23, 4. Dezember 2000 (2000-12-04), Seiten 4980-4983, XP002396708 ISSN: 0031-9007
- RUSU D ET AL: "Dynamic light scattering during shear: measurements of diffusion coefficients" POLYMER, ELSEVIER SCIENCE PUBLISHERS B.V, GB, Bd. 40, Nr. 6, März 1999 (1999-03), Seiten 1353-1357, XP004374475 ISSN: 0032-3861
- HEINEMANN C ET AL: "Tracer microrheology of gamma-dodecalactone induced gelation of aqueous starch dispersions" CARBOHYDRATE POLYMERS, APPLIED SCIENCE PUBLISHERS, LTD. BARKING, GB, Bd. 55, Nr. 2, 22. Januar 2004 (2004-01-22), Seiten 155-161, XP004485276 ISSN: 0144-8617
- SCHEFFOLD F ET AL: "Observation of Long-Range Correlations in Temporal Intensity Fluctuations of Light" PHYSICAL REVIEW, B. CONDENSED MATTER, AMERICAN INSTITUTE OF PHYSICS. NEW YORK, US, Bd. 56, Nr. 17, 1. November 1997 (1997-11-01), Seiten 10942-10952, XP002319585 ISSN: 0163-1829
- PETEKIDIS G ET AL: "Shear-induced yielding and ordering in concentrated particle suspensions" PHYSICA A ELSEVIER NETHERLANDS, Bd. 306, Nr. 1-4, 1. April 2002 (2002-04-01), Seiten 334-342, XP002396709 ISSN: 0378-4371
- SCHEFFOLD F ET AL: "Universal conductance fluctuations of light" PHYSICAL REVIEW LETTERS APS USA, Bd. 81, Nr. 26, 28. Dezember 1998 (1998-12-28), Seiten 5800-5803, XP002396710 ISSN: 0031-9007

## Beschreibung

### Eintergrund der Erfindung

Die Methode der Laser-Lichtstreuung erlaubt die zerstörungsfreie Charakterisierung von Proben in Hinblick auf deren Mikrostruktur; Messgrössen sind beispielsweise die Partikelgrösse in kolloidalen Suspensionen oder Emulsionen oder die viskoelastischen Eigenschaften von Gelen. Zur Untersuchung wird die Probe mit kohärentem Licht eines Lasers bestrahlt und das in der Probe gestreute Licht wird mittels eines oder mehrerer Detektoren gemessen und anschliessend analysiert. Prinzipiell wird zwischen statischer und dynamischer Lichtstreuung unterschieden, wobei bei der statischen Lichtstreuung durch eine Analyse der Winkelverteilung der gemessenen Streulichtintensitat die geometrischen Abmessungen der Streuzentren in der Probe ermittelt werden können. Die dynamische Lichtstreuung hingegen untersucht das zeitliche Verhalten der Intensität des Streulichts, aus welchem die Bewegung der Streuzentren folgt, die wiederum mit deren geometrischen Form zusammenhangt. Beide Methoden, die statische Lichtstreuung und die dynamische Lichtstreuung werden hauptsächlich zur Untersuchung von Proben eingesetzt, die Partikel im Grössenbereich von wenigen Nanometern bis zu mehreren hundert Mikrometern enthalten. Wichtigste Massgrössen sind Partikelgrösse, Partikelform und die wechselwirkungseigenschaften zwischen den Partikeln. Da die Theorie der klassischen statischen und dynamischen Lichtstreuung auf Einfachstrauprozessen des Lichtes in der Probe beruht, können damit nur quasi-transparente Proben untersucht werden. Viele Proben, z.B. Milch, müssen daher für die Messung stark verdünnt werden. Es sind daher in den letzten Jahren neue Methoden der dynamischen Lichtstreuung entwickeit worden, die auch die Untersuchung optisch trüber Proben erlauben. Eine verbreitete Methode ist die sog. "Diffusing Wave Spectroscopy" (DWS) [1]. Diese Methode basiert auf der Beschreibung der Lichtausbreitung in trüben Medien durch einen Diffusionsprozess des Lichts. Damit können selbst Proben wie Mich oder Keramik-Sole ohne eine Verdünnung der Probe untersucht werden. Zudem erlaubt die die sogenannte DWS-basierte optische Mikrorheologie eine Bestimmung der viskoelastischen Eigenschaften (i.e. Schermodule G'(ω), G"(ω)) einer Probe durch eine DWS-Messung [2]. Die vorliegende Erfindung beschreibt eine Methode, um die Messzeit von DWS-Messungen im vergleich zur bisherigen Methode um einen Faktor 100-1000 zu verkürzen.

Der Artikel "Diffusing-wave spectroscopy of nonergodic media"; Review E-Statistical, Nonlinear, and Soft Matter Physics; June 2001; vol. 63, no. 6, PG061404/1-11 offenbart ein Messgerät zur laseroptischen, mikro-rheologischen Charakterisierung von Proben mittels DWS, wobei die dynamische Vielfachstreuung einer trüben Probe durch eine Autokorrelationsfunktion des gestreuten und detektierten Lichtes bestimmt wird. Der Lichtstrahl läuft zunächst eine mit einer hochviskosen kolloidalen Suspension gefüllten Zelle, bevor er sie Messzelle selbst erreicht.

Der Artikel " Ensemble-averaging in dynamic light scattering by an echo technique", review of scientific instruments, 2004-07-00; Pham KN, vol. 75, no. 7, PG 2419-2431, offenbart ein Messgerät zur laseroptischen, mikro-rheologischen Charakterisierung von Problen mittels DLS, wobei die dynamische Vielfachstreuung einer trüben Probe durch eine Korrelationsfunktion des gestreuten und detektierten Lichtes bestimmt wird. Die flüssige Probe befindet sich in einer zylindrischen Glaszelle, die während der Messung kontinuierlich rotiert wird.

### Zeichnungen

Die Erfindung wird anhand der beigefügten Figuren näher erläutert, wobei zeigen
- Fig. 1: den schematischen Aufbau des erfindungsgemässen Lichtstreugeräts und
- Fig. 2: einen Vergleich einer Messung mit Zeitmittlung und einer Messung mit Two-Cell Echo DWS.

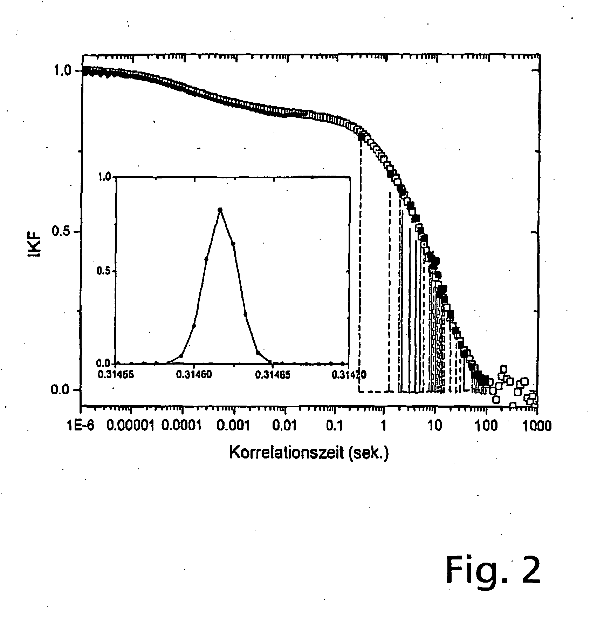

### Erläuterungen zu Fig. 2

Die Intensitätskorrelationsfunktion IKF von Laserlicht reflektiert von einer Mischung aus Polystyrol (Durchmesser 720 nm) und einer viskoelastischen Tensidlösung. Die Beleuchtung erfolgt über eine rotierende Milchglasscheibe, so dass typische Korrelationsechos bei der Rotationsfrequenz und Vielfachen davon beobachtet werden (gestrichelte Linien und Inset, zwei Rotationsfrequenzen 3.17 Hz, Auflösung 8µs, Messzeit 40 Sekunden und 0.508 Hz, Auflösung 50µs, Messzeit 110 Sekunden). Intensitätskorrelationsfunktion IKFₛ des Systems ohne Rotation. Dunkle Symbole: aus der Analyse der Korrelationsechos. Offene Symbole: erhalten durch Zeitmittelung ohne Rotation über eine Dauer von 3600 Sekunden.
Durchgezogene Linie: IKFₛ bei kurzen Zeiten bestimmt durch extrem langsame Rotation der Milchglasscheibe und Zeitermittlung (nach [4]).

### Beschreibung der Erfindung und Ausführung

Gegenstand der Erfindung ist ein Messgerät zur Laseroptischen charakterisierung der Dynamik und der Fliesseigenschaften z.B. Rheologie von Materialien mit einem charakteristischen dynamischen Elastizitätmodul Kleiner 1 MPa, sogenannten weichen Materialien. Die Erfindung ermöglicht es die Kenngrösse der DWS, die Intensitätsautokorreletionsfunktion (im Folgenden IKF), ohne oder nur mit geringer Zeitmittelung zu bestimmen. Dadurch ergibt sich ein vorteil bei der Messdauer um mindestens einen Faktor 100-1000.

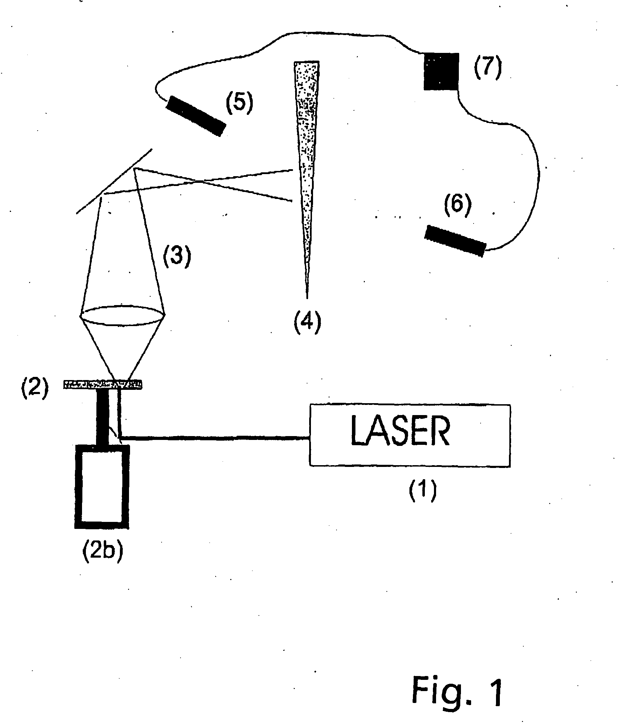

Im folgenden wird ein Weg aufgezeigt wie die Erfindung ausgeführt werden kann. Die Probe ist entweder bereits hinreichend trübe (als Beispiel sei Joghurt genannt) oder wird mit einer kleinen Menge (ca. Grössenordung 1 Volumenprozent) kompatibler stark streuender kolloidaler Artikel vermischt (z.B. Polystyrol oder TiO2 Kugeln, typischer Durchmesser 100-1000nm). Im folgenden wird mit dem beschriebenen Gerät die IKF bestimmt (mit Hilfe eines digitalen Korrelators). Das Messgerät, Abbildung 1, weist eine Lichtquelle zur Erzeugung eines Laserstrahls (1) auf, welcher eine opake (trübe) feste Substanz beleuchtet (2) (z.B. eine Milchglasscheibe). Das diffuss transmittierte Licht beleuchtet über ein einfaches Linsensystem (3) die Probe (4) gefolgt von einer Detektionseinheit welche das reflektierte oder transmittierte Licht registriert (5,6). Die Messeinheit ist dadurch gekennzeichnet, dass eine einzige Lichtquelle (1) zwei aufeinanderfolgenden Einheiten beleuchtet, wovon eine mit konstanter Frequenz f oszilliert oder rotiert wird (2,2b-Oszillator oder Rotationseinheit) und die andere die zu untersuchende Substanz (Probe) enthält (4). Dabei registriert man nahezu in Echtzeit eine Folge von Korrelationsechos (siehe Abbildung 2) welche, aufgrund der schnelle Rotation, bereits ein Ensemble-gemitteltes Signal darstellen. Das Beispiel zeigt das reflektierte Signal erhalten von einer Mischung aus Polystyrol (Durchmesser 720 nm) und einer viskoelastischen Tensidlösung (100 mmol/l cetylpyridinium chloride und 250 mmol/L sodium salicylate)

Zur Bestimmung der echten (nichtrotierten) IKF₉ des Systems kann der Maximalwert der Korrelationsechos herangezogen werden (was der einhellenden Kurve entspricht). Es zeigt sich allerdings, dass die flache des Echosignals eine zuverlässigere Grösse zur Bestimmung der IKF₉, verstellt, da eine nichtperfakte Rotation zwar die Höhe des Echosignals beeinflussen kann, die Fläche aber in erster Näherung unverändert lässt (vorgehensweise basierend auf einer Analyse von Korrelationsechos in Einfächstreuexperimenten (3)). Diese Fläche wiederum kann durch eine einfache Aufsummierung der detektierten Punkte des Echosignals erreicht worden, selbst dann, wenn die Echo-Maxima nicht expizit erfasst werden. Grund ist, dass eine Verringerung der Auflösung der detektierten IKF zunächst nicht zu einem Verlust an Auflösung bzgl. IKF₉ fuhrt, da eine verringerte Auflösung (IKF) zunächst nichts anderes als eine Integration einer Reihe von Messpunkten darstellt. Erst wenn die Auslösung deutlich schlechter wird als die Breite der Echos (in der Abbildung ca. 20 µs) verringert sich die Qualtität der erhaltenen Daten.
Die Abbildung zeigt das Ergebnis einer solchen Analyse, verglichen mit einer traditionellen Messung an demselben System (Zeitmittelung; Messzeit: eine Stunde). Die nichtnormierten Masspunkte der Echomessung-Flächenanalyse wurden hierbei mit einem konstanten Faktor multipliziert.
Die IKF bei kurzen Zeiten t<1/fₘₐₓᵢₘₐₗ kann durch extrem langsame Rotation oder Translation der Milchglasscheibe vermessen werden (4). Dadurch kann die IKF über den gesamten zugängliche Bereich (t=10⁻⁴ sek - 100 sek) nahezu in Echtheit (hier 110 Sekunden) bestimmt werden.

Die Ergebnisse zeigen deutlich die hervorragende Übreinstimmung der neuen Methode mit traditioneller Zeitmittelung. Die neue Erfindung "*Two-cell Echo-DWS"* bietet allerdings den entscheidenden Vorteil eines deutlich besseren Signal/Rauschverhältnis bei gleichzeit erheblich kürzerer Messzeit. Eine Charakteriserung von Relaxationsproressen im Bereich von bis zu 10 Sekunden kann somit in deutlich weniger als einer Minute vermessen werden. Der Zeitbereich von 0.001-10 Sekunden ist von grossem Interesse bei der Charakterisierung komplexer Systeme da direkt eine Verbindung mit den viskoleastischen Eigenschaften (i.e. Schermodule G'(ω), G''(ω)) im Frequenzbereich ω=0.1-1000 rad/sek hergestellt, werden kann (Mikrorheologie).
(1) G. Maret and P. E. wolf, Z., Multiple Light-Scattering from disordered media - the effect of Brownian motion of scatterers, Z. Phye. B 65, 409 (1987); D.J. Pine, D. A. Weitz, P. M. Chaikin, and E. Herbolzheimer, Diffusing-Wave Spectroscopy, Phys. Rev. Lett. 60, 1134 (1988)
(2) T.G. Mason and D.A. Weitz, Optical measurements of frequency-dependent linear viscoelastic moduli of complex fluids, Phys, Rev. Lett. 74, 1250 (1995)
(3) Pham. K.N., et al., Ensemble-averaging in dynamic light scattering by an echo technique. Review of Scientific Instruments, 2004, 75(7): p. 2419-2431.
(4) Scheffold, F., et al., Diffusing-wave spectroscopy of nonergodic media. Physical Review 2, 2001. 63(6).

## Patentansprüche

1. Messgerät zur laseroptischen Charakterisierung der Dynamik und der Fliesseigenschaften z.B. Rheologie von Materialien mit einem charakteristischen dynamischen Elastizitätmodul kleiner 1 MPa, so genannten welchen Materialien, umfassend eine trübe feste substanz (2),
eine Lichtquelle zur Erzeugung eines Laserstrahls (1) zur Beleuchtung Sowohl einer trüben Probe (4) als auch der trüben festen Substanz (2),
ein Linsensystem (3) und
eine Detektionseinheit (5, 6) zur Registrierung des Lichtes,
• wobei die Substanz (2) mittels eines Oszillators oder einer Rotationseinheit (2, 2b) mit konstanter Frequenz oszilliert oder rotiert wird, und
• wobei der Lichtstrahl entweder der Reihenfolge nach die Substanz (2), das Linsensystem (3) und die probe (4) durchläuft, wobei das von der Probe (4) transmittierte oder reflektierte Licht von der Detektionseinheit (5, 6) registriert wird oder die Probe (4) direkt von der Lichtquelle beleuchtet wird und das Linsensystem (3) und die Substanz (2) hinter der Probe (4) Installiert sind wobei das von der Substanz transmittierte oder reflektierte licht von der Detektionseinheit (5,6) registriert wird

2. Messgerät nach Anspruch 1, **dadurch gekennzeichnet, dass** die feste Substanz (2) aus einer Milchglasscheibe besteht, welche mit einer konstanten Frequenz oszilliert oder rotiert.

3. Messgerät nach Anspruch 1, **dadurch gekennzeichnet, dass** es mit einem Linsensystem (3) ausgerüstet ist, welches die lichtstarke Beleuchtung der Probe (4) in der Messzelle generiert.

4. Messgerät nach Anspruch 1, **dadurch gekennzeichnet, dass** die Detektionseinheit (5, 6) die reflektierte oder transmittierte Lichtintensität oder den Photonenstrom des Lichts registriert und mit einer Korrelatoreinheit (7) verbunden ist.

5. Messgerät nach Anspruch 1, **dadurch gekennzeichnet, dass** Korrelationsechos aufgrund der frequenzstabilen Oszillation/Rotation Frequenz w von der festen Substanz (2) zur Berechnung der Intensitätkorrelationsfunktion (IKF) für t>=1/w verwendet werden.

6. Messgerät nach Anspruch 1, **dadurch gekennzeichnet, dass** die IKF bei kurzen Zeiten t<=1/w durch extrem langsame Rotation oder Translation von der festen Substanz (2) gemessen wird und **dadurch** die IKF über den gesamten zugänglichen Bereich, t=101\-6 sec - 10 sec, bestimmt werden kann.

7. Messgerät nach Anspruch 1, **dadurch gekennzeichnet, dass** eine keilförmige verschiebbare Messzelle verwendet werden kann, so dass je nach gewählter Postition der optische Weg durch die Probe kontinuierlich angepasst werden kann.

8. Messgerät nach Anspruch 1, **dadurch gekennzeichnet, dass** neben der IKF auch direkt das viskoelastische Spektrum G'(w), G" (w) bestimmt wird.

## Claims

1. Measurement device for laser optical characterization of the dynamic and the fluid properties e.g. rheology of materials with a characteristic dynamic elastic modules smaller than 1 MPa so called soft materials comprising a dimly solid substance (2), a light source for generation of a laser beam (1) for lighting of a dimly probe (4) as well as the dimly solid substance (2),
a system of lenses (3) and
a detection unit (5, 6) for registration of the light,
• whereby the substance (2) oscillates or rotates by means of an oscillator or a rotation unit (2, 2b) at a constant frequency, and
• whereby the light beam either passes in the order substance (2), system of lenses (3) and probe (4), whereby the light reflected or transmitted from the probe (4) is registered from the detection unit (5, 6), or the probe (4) is lighted directly from the light source and the system of lenses and the substance (2) are installed behind the probe, whereby the from the substance transmitted or reflected light is registered from the detection unit (5, 6).

2. Measurement device according to claim 1, **characterized in that** the solid substance (2) consists of a milk glass plate, which oscillates or rotates at a constant frequency.

3. Measurement device according to claim 1, **characterized in that** it is equipped with a system of lenses (3), which generates the intense luminous lighting of the probe (4) in the measuring cell.

4. Measurement device according to claim 1, **characterized in that** the detection unit (5, 6) registers the reflected or transmitted light intensity or the stream of photons of light and is connection in with a correlation unit (7).

5. Measurement device according to claim 1, **characterized in that** correlation echos are used thanks to the frequency stable oscillation/rotation frequency w of the solid substance (2) for the calculation of the intensity correlation function (IKF) for t>=1/w.

6. Measurement device according to claim 1, **characterized in that** the IKF at short time t<=1/w through extreme slow rotation or translation of the solid substance (2) is measured und therefore the IKF can be determined over the entire accessible range t= 10^-6 sec - 10 sec.

7. Measurement device according to claim 1, **characterized in that** a wedge-shaped relocatable measurement cell can be used, so that according to the chosen position the optical path through the probe can be adapted continuously.

8. Measurement device according to claim 1, **characterized in that** beside the IKF is directly determined the viscoelastic spectrum G'(w), G " (w).

## Revendications

1. Appareil de mesure pour la caractérisation optique laser de la dynamique et des propriétés d'écoulement, par exemple la rhéologie, de matériaux avec un module d'élasticité dynamique caractéristique plus petit qu'1MPa, de matériaux dits mous, comprenant
une substance trouble solide (2),
une source lumineuse pour produire un rayon laser (1) pour éclairer aussi bien une sonde trouble (4) qu'une substance trouble solide (2),
un système de lentilles (3) et
une unité de détection (5, 6) pour enregistrer la lumière,
• la substance (2) étant oscillée ou tournée au moyen d'un oscillateur ou d'une unité de rotation (2, 2b) à une fréquence constante, et
• le faisceau lumineux traversant à la suite la substance (2), le système de lentilles (3), et la sonde (4), la lumière transmise ou réfléchie par la sonde (4) étant enregistrée par l'unité de détection (5,6), ou la sonde (4) étant directement illuminée par la source lumineuse et le système de lentilles (3) et la substance (2) étant installés derrière la sonde (4), la lumière transmise ou réfléchie par la substance étant enregistrée par l'unité de détection (5,6).

2. Appareil de mesure selon la revendication 1, **caractérisé en ce que** la substance solide (2) est constituée d'une plaque de verre laiteuse, qui oscille ou tourne à une fréquence constante.

3. Appareil de mesure selon la revendication 1, **caractérisé en ce qu'**il est équipé d'un système de lentilles (3), qui génère l'illumination intense de la sonde (4) dans la cellule de mesure.

4. Appareil de mesure selon la revendication 1, **caractérisé en ce que** l'unité de détection (5, 6) enregistre l'intensité lumineuse réfléchie ou transmise du flux de photons de la lumière et est reliée à une unité de corrélation (7).

5. Appareil de mesure selon la revendication 1, **caractérisé en ce que** des échos de corrélation sont utilisés pour le calcul de la fonction de corrélation d'intensité (IKF) pour t>=1/w en raison de la fréquence d'oscillation/de rotation stable w de la substance solide (2).

6. Appareil de mesure selon la revendication 1, **caractérisé en ce que** la fonction de corrélation d'intensité (IKF) est mesurée pour des temps courts t<=1/w par une rotation ou translation extrêmement lente de la substance solide (2), et par là-même l'IKF peut être déterminée sur toute la plage accessible t=10^-6 sec à - 10 sec.

7. Appareil de mesure selon la revendication 1, **caractérisé en ce qu'**une cellule de mesure cunéiforme déplaçable peut être employée afin que le chemin optique puisse être adapté continuellement en fonction de la position choisie.

8. Appareil de mesure selon la revendication 1, **caractérisé en ce que** le spectre viscoélatique G'(w), G"(w) est aussi déterminé mis à part l'IKF.
